(19) Europäisches Patentamt
European Patent Office
Office européen des brevets

(11) **EP 0 464 477 B1**

(12) **EUROPEAN PATENT SPECIFICATION**

(45) Date of publication and mention
of the grant of the patent:
**06.10.1999 Bulletin 1999/40**

(51) Int Cl.6: **G11B 20/10**, G11B 20/14

(21) Application number: **91110096.4**

(22) Date of filing: **19.06.1991**

(54) **Process and circuit arrangement for converting analogue read signals into digital signals**

Verfahren und Schaltungsanordnung zum Umsetzen analoger Wiedergabesignale in digitale Signale

Procédé et dispositif de circuit pour convertir des signaux analogues de lecture en signaux numériques

(84) Designated Contracting States:
**DE FR GB NL**

(30) Priority: **29.06.1990 DE 4020875**

(43) Date of publication of application:
**08.01.1992 Bulletin 1992/02**

(73) Proprietor: **Digital Equipment International GmbH
D-87600 Kaufbeuren (DE)**

(72) Inventor: **Sadowski, Siegbert
W-8951 Irsee (DE)**

(74) Representative: **Betten & Resch
Reichenbachstrasse 19
80469 München (DE)**

(56) References cited:
**EP-A- 0 058 253** **EP-A- 0 324 532**
**US-A- 3 518 650** **US-A- 4 227 175**

- **PATENT ABSTRACTS OF JAPAN vol. 8, no. 214 (P-304)(1651) 29 September 1984 & JP-A-59 096 513 ( NIPPON GAKKI SEIZO K.K. ) 4 June 1984**
- **PATENT ABSTRACTS OF JAPAN vol. 8, no. 214 (P-304)(1651) 29 September 1984 & JP-A-59 096 513 ( NIPPON GAKKI SEIZO K.K. ) 4 June 1984**

## Description

The invention relates to a process and a circuit arrangement for converting analogue read signals, which are read by a read-head of a storage device sensing a storage medium, into digital signals, wherein the analogue read signals are previously treated.

For storing large quantities of data, in mass stores the information is written on to moving magnetic or optical media. In this connection, the data are coded into a series of bits and the series of bits is then "written" by means of a write head in the form of magnetic flux changes on to the medium.

For retrieving the information, the data are read by a read-head and decoded by means of a read channel into the original sequence of bits.

In this connection, various coding processes are used, such as say the MFM (Modified Frequency Modulation) process, the RLL (Run Length Limited) 1.7 process, the RLL 2.7 process or the like, which have differing storage capacities and transfer rates as a result and which have the common factor that the data are converted into magnetic flux changes.

The object of the reading channel consists in so treating the weak reading signals received by the read-head that a subsequent conversion into digital signals/information is possible. In this connection, the signals read by the read-head are customarily first prepared by amplification and filtering, compensation for linear distortion, amplitude control or the like. Thereafter, to determine the signal maximum, the analogue read signal is differentiated and compared in a threshold value detector with a threshold value in order thus to achieve digital information. This still coded digital information is then decoded in a decoder into the original bit sequence.

In the known techniques, exceeding a threshold value is used as a criterion as to whether a change in flux has taken place or not. The disadvantages of the known techniques, which show themselves in falsely detected flux changes, then become obvious if the interference level (signal to noise ratio or ratio of the amount of signal to the amount of interference) becomes worse.

Since the error rate of data decoding is dependent on the signal to noise ratio, with increasing storage density the criterion of the flux change for high power stores becomes ever more critical. Current stores show on going below around 20 to 26 dB signal to noise ratio an increase in the error rate. These errors can, indeed - within limits - be corrected with error correction procedures. However this requires a substantial expenditure of time in the entire storage system and accordingly reduces the maximum achievable data throughput in comparison to the theoretically possible data throughput.

US-4,227,175 discloses a data recognition apparatus which includes a temporary storage to hold three data bits, a readable storage to store eight different sequences which are expected to occur, and a comparison means to find the closest match of the contents of the temporary storage with the readable storage at each bit time. Error detection and error correction are realized as each bit is recognized three times sequentially. The apparatus may use surface acoustic wave and charge coupled device filter banks, and analog to digital conversion plus data processor comparison.

In contrast to this, the invention has the object of so improving the process and the circuit arrangement of the above described type that the error rate of data decoding can be maintained small even with a small signal to noise ratio, that is with a poor ratio of the amount of signal to the amount of interference.

This object is solved in that the shape of the treated analogue read signal is sensed, compared with a stored read signal comparison pattern, which corresponds to a normal read signal, and on agreement the presence of a certain correlation is given, this part of the read signal is evaluated as a read pulse and on non-agreement this part of the read signal as a non-pulse.

The present invention is defined in claims 1 and 6.

The dependent claims disclose particular embodiments of the invention.

An advantage of the invention consists in that with it a much improved immunity against noise and other interference signals can be achieved. Thereby an improved data security and integrity can be guaranteed.

With the invention it is possible to keep the error rate of data decoding small even with a small signal to noise ratio or generally to diminish the error rate so that the actually achieved and theoretically possible data throughput strongly approximate one another.

In the invention in contrast to the state of the art in which the exceeding of a threshold value was used as a recognition criteria for the flux change, the signal shape of the read signal is made use of as a criterion for recognising the flux change.

If in the known techniques reading signals could be safely determined only down to signal to noise ratios of at minimum 20 dB, then with the invention up to a signal to noise ratio of only 3 dB is possible.

Further advantageous embodiments of the invention are described in Claims 2 to 16.

Brief Description of The Drawing

A more detailed understanding of the invention may be had from the following description of a preferred embodiment, given by way of example and to be understood in conjunction with the accompanying drawing wherein:

Fig. 1 the block circuit diagram of a reading channel;

Fig. 2 the block circuit diagram of the data correlator in acccordance with the invention;

Fig. 3 the circuit diagram of an emodiment of an analog pipeline of the data correlator in acccordance with the invention according to Fig. 2 and

Fig. 4 the block circuit diagram of the data correlator according to Fig. 2 in accordance with the invention with nine taps.

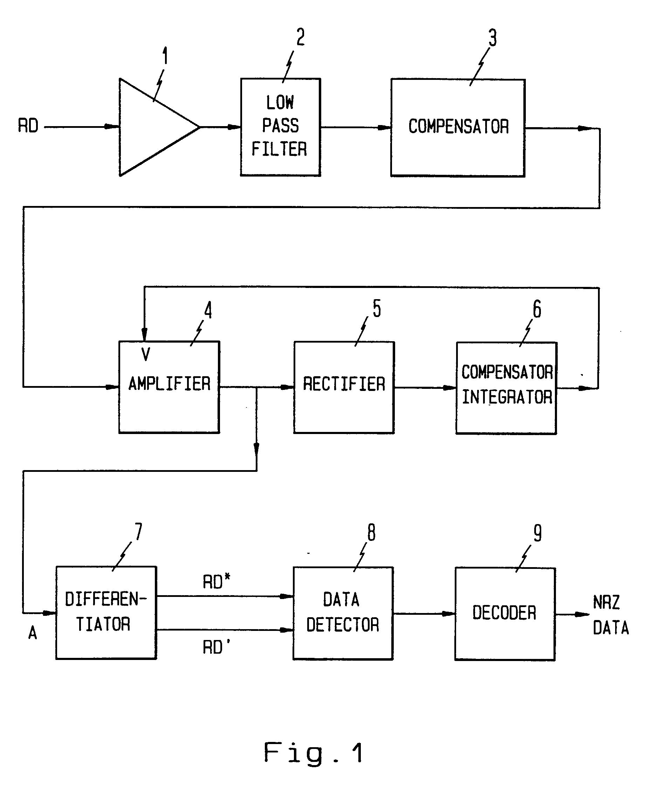

In the block circuit diagram illustrated in Fig. 1 of a normal read channel, an analogue read signal RD sensed by a reading head is fed to a pre-amplifier 1. Therein the reading signal RD is normally amplified to voltage values in the lower voltage region. The output signal of the pre-amplifier 1 is fed to a low pass filter (TP) 2 which filters out undesired high frequency interference signals.

In a compensator 3, linear distortion of the read signal RD, which is phase distorted on account of magnetic phenomena and electric characteristics such as packet running time distortion, are compensated.

The output signal of the compensator 3 is fed to a control circuit for amplitude control of the analogue read signal, wherein the control circuit for amplitude control has one after the other a variable amplifier 4, a full wave rectifier 5 and a compensator integrator 6. In this connection, the output signal of the compensator/ integrator 6 is fed back to the variable amplifier 4.

Because of errors in the recording medium, the read signal amplitude can vary, which, by means of the control circuit, is so controlled that the automatic amplification control provides at an output signal a constant amplitude analogue signal A, which is fed to a differentiator 7.

In differentiator 7, the analogue read signal is differentiated to determine the signal maximum, whereon at the output of the differentiator 7, the processed analogue read signal RD* and the differentiated read signal RD' are present.

In a data detector 8, the differentiated analogue read signal RD' and optionally also the treated analogue read signal RD* are compared with a threshold value and converted into a digital signal/information. In this connection, the presence of a signal is interpreted as a logical "1" and the remainder or "no signal" as a logical "0". This digital signal is then decoded in a decoder 9, in the example illustrated into NRZ (non-return-to-zero) data, which correspond to the original sequence of bits.

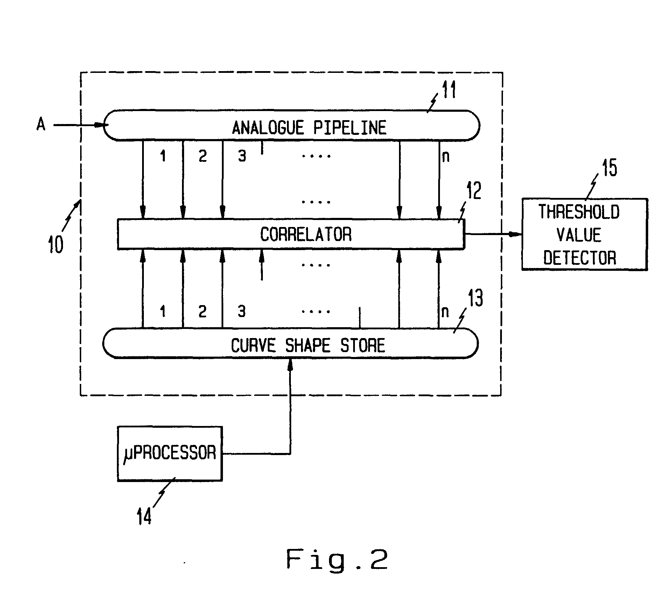

In the process according to the invention or in the circuit arrangement in accordance with the invention, in place of the differentiator 7 and the data detector 8, a data correlator 10 is used, the block circuit diagram of which is illustrated in Fig. 2.

The data correlator 10 has an analogue pipeline 11, a correlator 12 and a curve shape store 13, which is connected to a microprocessor 14.

In the case of the analogue pipeline 11, this is an analogue short period store to which the output signal A (compare Fig. 1) of the control circuit for amplitude control is fed. The object of analogue pipeline 11 consists in the short period storage of an analogue read signal and for collimating this signal. The function is thus similar to a shift register with serial input and parallel output with the exception that the process is continuous and requires no clock.

The actual read signal continuously flows through the analogue short period store. The analogue pipeline 11 has at equal time delay distances n taps, which in the following are simply called taps. At these taps, the signal condition can be simultaneously taken off at various points in time. The number of taps determines the accuracy and quality of the correlation or of the entire system.

The total length of the analogue pipeline should preferably have the width of one read impulse, which normally lies in the region of 10s of nanoseconds.

As analogue pipeline, there can be used, for example, a transmission line on which the signal is delayed. Thus, for example, there amounts with a 50 Ohm coax cable a delay of around 5 nsec/m.

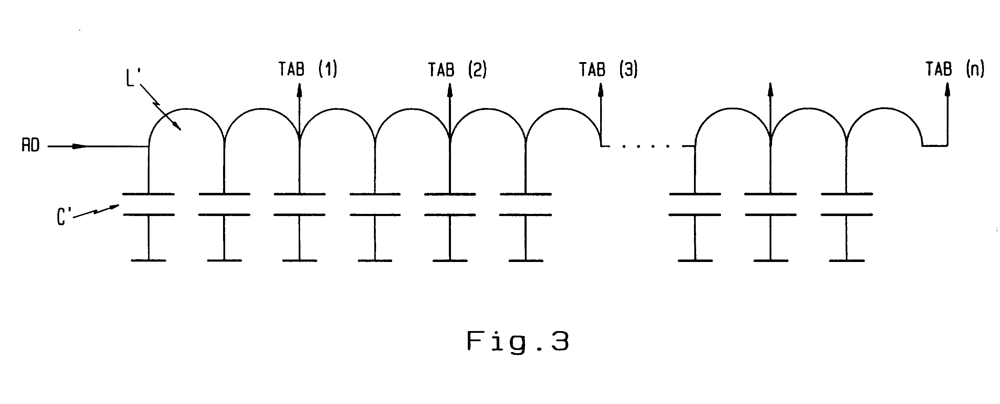

As analogue pipeline, however, there can also be used a delay line which consists essentially of an inductance with distributed capacity, as is illustrated in Fig. 3. This delay line has end taps and a capacitative layer on which forms a plurality of capacitors, of which one electrode in each case is earthed and the other electrode of which is connected in each case with the delay line. Thereby the delay line has a distributed capacity C' and a distributed inductance L'. The delay line is continuously fed with the input signal RD and it can be simultaneously taken off at various points in time at the end taps.

With such delay lines currently delays of ≤ 100 picoseconds to ≳ 1 microsecond are achieved.

As analogue pipeline, also other analogous short period signal stores can be used, such as, for example, amplifier stages, which, determined by capacitances and cutout behaviour of transistors likewise have a delay time, so that by a corresponding number of amplifier stages, a similar short period signal store can be achieved.

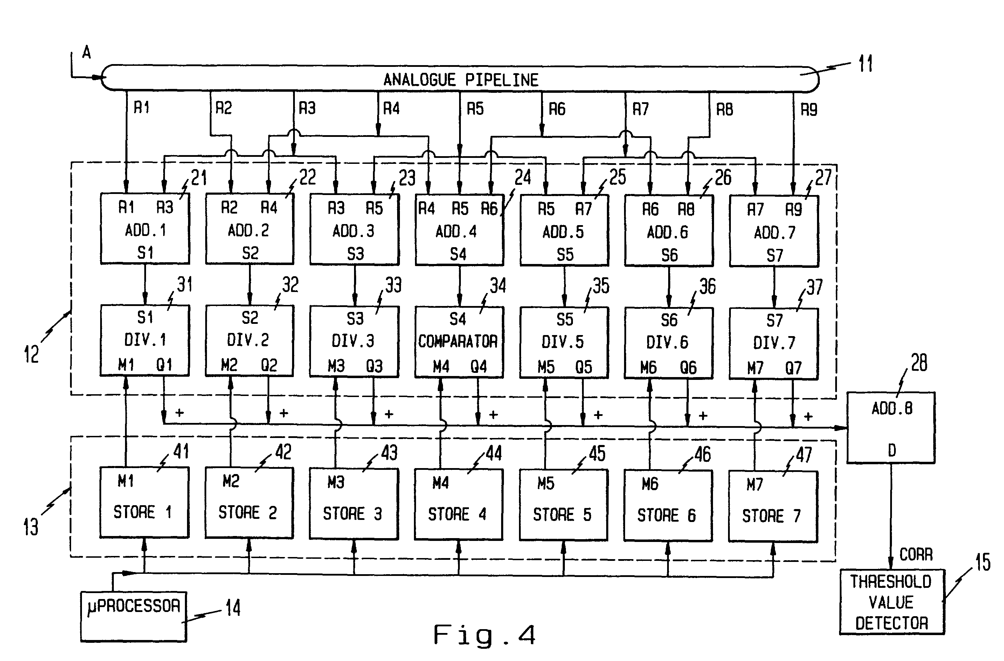

The data correlator in accordance with the invention is now described in more detail with reference to the block circuit diagram illustrated in Fig. 4. In this embodiment, the analogue pipeline 11 has n = 9 taps, on which the signals R1 to R9 are taken off.

The correlator 12 has, in the embodiment illustrated in Fig. 4, seven adders 21 to 27 as well as dividers 31 to 33, a comparator 34, and dividers 35 to 37. In this connection, it is, in each case, a question of analogue calculation functions which can be implemented by corresponding switches. The curve shape store 13 has seven stores 41 to 47.

As already explained above, the analogue pipeline 11 has nine tappings or taps at which, in each case, the signals R1 to R9 are taken off. The signal R1 is fed to the first input of the adder 21 and the signal R2 to the first input of the adder 22. The signal R3 is fed to the second input of adder 21 and the first input of adder 23. The signal R4 is fed to the second input of adder 22 and the first input of adder 24. The signal R5 is fed to the second input of adder 23, the second input of adder 24 and the first input of adder 25. The signal R6 is fed to the third input of adder 24 and the first input of adder 26. The signal R7 is fed to the second input of adder 25 and the first input of adder 27. The signal R8 is fed to the second input of adder 26 and the signal R9 to the second input of adder 27.

The output signal S1 present at adder 21 is fed to the divider 31, the signal S2 at the output of adder 22 to the divider 32 and the signal S3 present at the output of adder 23 to the divider 33. The signal S4 present at the output of adder 24 is fed to the comparator 34. The signal S5 present at the output of adder 25 is fed to the divider 35, the signal S6 present at the output of adder 26 is fed to the divider 36 and the signal S7 present at the output of adder 27 is fed to the divider 37.

As already explained above, the curve shape store 13 has stores 41 to 47. The curve shape store 13 stores the time collimated image of a typical read signal in the form of analogue voltage values, which are fed to the stores 41 to 47 from a microprocessor 14. The signal M1 present at the output of the store 41 is fed to the divider 31, the signal M2 present at the output of store 42 is fed to the divider 32, the signal M3 present at the output of store 43 is fed to the divider 33, the signal M4 present at the output of store 44 is fed to the comparator 34, the signal M5 present at the output of store 45 is fed to divider 35, the signal M6 present at the output of store 46 is fed to the divider 36 and the signal M7 present at the output of store 7 is fed to the divider 37, as is evident from Fig. 4.

The correlator 10 has the object of comparing the actual read signal A fed continuously into the analogue pipeline 11 with a stored pattern. In order to minimise the amplitude dependence of the actual read signal, the comparison is divided up into three regions "rising", "maximum" and "falling".

For this purpose, stores 41 to 43 contain the rise comparison values M1, M2 and M3 of the "rise" region, the store 44, the average maximum of amplitude M4 of the comparison pattern read signal, and the stores 45 to 47 the slope comparison values M5 to M7 of the "falling" region.

For calculating the correlation in the "rising" region, the signals R1 to R5 taken off from the analogue pipeline 11 and the signals M1 to M3 present at the output of stores 41 to 43 are used.

In the functional blocks, adder 21, adder 22 and adder 23 for calculating the rise of the read signal the differences are formed by the following equation

$$S_i = R_{i+2} - R_i \tag{1}$$

wherein i runs from 1 to 3 and the intermediate result Si (S1, S2, S3) lies, in each case, at the adders 21, 22 or 23 respectively. This means that at the output of adder 21, the intermediate result S1 = R3 - R1, at the output of adder 22 the intermediate result S2 = R4 - R2 and at the output of the adder 23 intermediate result S3 = R5 - R3.

Then in the divider 31, divider 32 and divider 33, the individual correlations are formed according to the following formula

$$Q_i = \left| \frac{S_i}{M_i} - 1 \right| \tag{2}$$

wherein i runs from 1 to 3 and $Q_i$ represents the output signals $Q_1$, $Q_2$ or $Q_3$ present at the dividers 31 to 33 and the signals M1, M2 and M3 provided by the source 41 to 43 rise comparison values of a typical read signal.

The calculation of the correlation in the "maximum" region takes place by a comparison of the signals R4, R5 and R6 with the signal M4 provided from store 44.

In the functional block adder 24, the arithmetic mean of the expected peak amplitude of the actual reading signal as an intermediate result S4 is determined according to the following formula:

$$S4 = \frac{1}{3} \sum_{m=4}^{6} R_m \tag{3}$$

Then in comparator 34, the intermediate result S4 is compared with the signal M4 provided from store 44 according to the following equation to determine the individual correlation:

$$Q^4 = \begin{cases} 0 & \text{in the case that } S4 \geq c \times M4 \\ n & \text{in the case that } S4 < c \times M4 \end{cases} \tag{4}$$

wherein the individual correlation $Q^4$ represents the starting signal for the comparator 34. The parameter c lies with 9 taps according to experience in the region

$$0.4 \leq c \leq 0.6 \tag{5}$$

The parameter c must be changed with a higher number of taps correspondingly.

With the exception of the sign, the calculation of the correlation in the "falling" region takes place in the same sense as in the "rising" region by comparison of the signals R5 to R9 with the signals M5, M6, M7.

Thus in the function blocks adder 25, adder 26 and adder 27 the differences for calculating the gradients of the read signal according to equation (1), wherein i runs from 5 to 7 are formed. As an intermediate result at the output of the adder 25, the signal S5 = R7 - R5, at the output of the adder 26, the signal S6 = R8 - R6 and at the output of the adder 27, the signal S7 = R9 - R7 is formed.

Then, as in the "rising" region, in divider 35 the output signal Q5, in divider 36 the output signal Q6 and in divider 37 the output signal Q7 is formed in accordance with equation (2), wherein i runs from 5 to 7.

The output signals Q1 to Q7 are fed to an adder 28 which at its output D determines the overall correlation factor CORR as the arithmetic mean of the individual correlations Qi according to the following formula:

$$CORR = \frac{1}{n-2} \sum_{i=1}^{n-2} Qi \qquad\qquad (6) \quad .$$

with n=9 in the example illustrated in Fig. 4.

The entire correlation factor CORR is fed for digitisation to the threshold value detector 15. The entire correlation factor in which at the output of the threshold value detector 15 a logical "1" is present, depends on the system requirements, in each case depending upon what interference distance the system should allow.

Should, e.g. also a smaller interference distance be omitted, then the overall correlation factor CORR, which determines whether at the output of the threshold value detector 15 there is present a logical "1" is chosen correspondingly high, e.g. at 0.8.

Because to the curve shape store 13 the time collimated image of typical read impulses are fed in the form of analogue voltage comparison values or gradient comparison values from the microprocessor 14, it is also possible to use adaptive techniques in order to achieve optimum efficiency. Thus it is, e.g. possible by iterative algorithms to determine the optimum comparison pattern for the curve shape store 13 in an individual system of test traces on a storage medium automatically. Thus, in particular, also the values illustrating the ideal curve shape stored in the curve shape store 13 can be matched to the individual characterising data of the respective read head or storage medium.

For storing the quasi static signal Mi (M1 to M7) suited for stores 41 to 47 are, in particular, digital/analogue (D/A) converters. In this connection, the voltage values or gradient comparison values are written by the microprocessor 14 into the D/A converter and can, if appropriate, also be modified by this for the purpose of optimisation.

Advantageous embodiments of the invention are possible without more ado for the man skilled in the art. Thus, e.g. an acceleration of the data throughput can be achieved in that the read signals are worked on in parallel and for this multiple curve shape stores are used.

## Claims

1. Process for converting analog signals corresponding to individual bits into digital signals, said analog signals having been read by a read-head of a storage device on sensing a storage medium, wherein the analog read signals have discernable shapes and have been previously processed before conversion, said conversion process comprising the steps of sensing the shape of the processed analog read signal, correlating it with a stored analog signal reference pattern which corresponds to a reference signal, and on agreement, which is given on the presence of a particular correlation result, evaluating the correlation result of the analog signal as a read pulse, and on non-agreement evaluating the correlation result of the read signal as a non-pulse, wherein

   the read pulse is evaluated as logical "1" and the non-pulse as logical "0", further comprising

   the steps off dividing the signal reference pattern into a plurality of sections, and storing a value per section characterizing the signal reference pattern, causing the read signals to run continuously through a short period signal store divided into a plurality of sections, thereby causing the read signal pattern to distributedly show up along those sections, deriving the voltage value of the read signal at each section from the short period signal store and correlating it section by section with the coresponding read signal reference pattern, wherein

   the correlation is divided into three regions, namely into a "rising" region, in which the signal reference pattern rises, into a "maximum" region in which the signal reference pattern has a maximum and into a "falling" region in which the signal reference pattern is falling, that in the "rising" region and in the "falling" region an intermediate value ($S_i$) is calculated by the voltage value ($R_i$) taken off at each respective section of the short period signal store being subtracted from that of the next but one section, and the correlation factor ($Q_i$) of the respective section is calculated by means of correlation with the corresponding value ($M_i$) of the signal reference pattern according to the following equation:

$$Q_i = \left| \frac{S_i}{M_i} - 1 \right|$$

that in the "maximum" region for calculating an intermediate value $(S_j)$ is calculated by the arithmetic mean being formed of the voltage values $(R_j)$ taken off in the centre sections of the short period signal store, and the correlation factor $(Q_j)$ is calculated by correlation with the value $(M_j)$ weighted by the number of sections of the signal reference pattern according to the following equation:

$$Q_j = \begin{cases} 0 & \text{in the case that } S_j \geq c \times Mj \\ n & \text{in the case that } S_j < c \times Mj \end{cases}$$

wherein c is chosen corresponding to the number (n) of the sections of the short period signal store; that the total correlation factor (CORR) is determined as the arithmetic mean of the individual correlations $(Q_i, Q_j)$, and that for a given total correlation factor (CORR) a read impulse or a logical "1" is emitted from a threshold value detector.

2. Process according of Claim 1, characterized in that the correlation condition is adjusted correspondingly to the permitted signal to noise ratio (ratio of signal amount to amount of interference).

3. Process according to one of Claims 1 to 2, characterized in that the values $(M_i, M_j)$ are characterizing the signal reference pattern and are stored in sections in the storage provided by a microprocessor.

4. Process according to Claim 3, characterized in that the values characterising the signal reference pattern are matched by means of the microprocessor to the individual system consisting of read head and storage medium.

5. Process according to one of Claims 1 to 4, characterized in that on parallel working of a plurality of read signals, a corresponding plurality of signal reference pattern stores are used.

6. Circuit arrangement for converting analogue signals corresponding to individual bits which are read by a read head of a storage device on sensing a storage medium into digital signals, with a device for processing the analogue read signals and a decoder for decoding the signals/data into a sequence of bits corresponding to the stored sequence of bits, characterized in that the circuit arrangement comprises:

a data correlator (10) which includes a short period signal store (11) in which the treated analogue read signal is stored, and a curve shape storage (13) in which a analog signal reference pattern corresponding to a reference signal is stored, and a correlator (12) which generates a correlation between the processed analogue read signal and the analog signal reference pattern, as well as a threshold value detector (15) which emits a read pulse on the presence of a particular correlation,
wherein
the read pulse is evaluated as logical "1" and the non-pulse as logical "0", further comprising means for dividing the signal reference pattern into a plurality of sections, and storing a value per section characterizing the signal reference pattern, causing the read signals to run continuously through a short period signal store divided into a plurality of sections, thereby causing the read signal pattern to distributedly show up along those sections, deriving the voltage value of the read signal at each section from the short period signal store and correlating it section by section with the coresponding read signal reference pattern, wherein
the correlation is divided into three regions, namely into a "rising" region, in which the signal reference pattern rises, into a "maximum" region in which the signal reference pattern has a maximum and into a "falling" region in which the signal reference pattern is falling, that in the "rising" region and in the "falling" region an intermediate value ($S_i$) is calculated by the voltage value ($R_i$) taken off at each respective section of the short period signal store being subtracted from that of the next but one section, and the correlation factor ($Q_i$) of the respective section is calculated by means of correlation with the corresponding value ($M_i$) of the signal reference pattern according to the following equation:

$$Q_i = \left| \frac{S_i}{M_i} - 1 \right|$$

that in the "maximum" region for calculating an intermediate value ($S_j$) is calculated by the arithmetic mean being formed of the voltage values ($R_j$) taken off in the centre sections of the short period signal store, and the correlation factor ($Q_j$) is calculated by correlation with the value ($M_j$) weighted by the number of sections of the signal reference pattern according to the following equation:

$$Q_j = \begin{cases} 0 & \text{in the case that } S_j \geq c \times Mj \\ n & \text{in the case that } S_j < c \times Mj \end{cases}$$

wherein c is chosen corresponding to the number (n) of the sections of the short period signal store; that the total correlation factor (CORR) is determined as the arithmetic mean of the individual correlations ($Q_i$, $Q_j$), and that for a given total correlation factor (CORR) a read impulse or a logical "1" is emitted from a threshold value detector.

7. Circuit arrangement according to claim 6, characterized in that the short period signal store is an analogue pipeline (11).

8. Circuit arrangement according to Claim ,7 characterized in that the analogue pipeline is a transmission line.

9. Circuit arrangement according to Claim 7, characterized in that the analogue pipeline is a delay line.

10. Circuit arrangement according to Claim 7, characterized in that the analogue pipeline is constructed from a series of amplifier stages.

11. Circuit arrangement according to one of Claims 6 to 10, characterized in that the short period signal store (11) has at even distances a plurality of tappings (taps) at which the analogue read signal can be continuously extracted in sections, that the curve shape storage is divided up into a plurality of individual storages, in which, in each of them, a value characterizing one section of the signal reference pattern is stored and that the correlator (12) is divided into a plurality of correlators which can carry out a sectionwise correlation between the analogue read signal and the signal reference pattern.

12. Circuit arrangement according to one of Claims 6 to 11, characterized in that the curve shape storage (13) is connected to a microprocessor (14) which feeds the signal reference pattern to the curve shape storage (13).

13. Circuit arrangement according to Claim 12, characterized in that the signal reference pattern fed by the microprocessor (14) to the curve shape storage (13) is matched to the individual characteristics of the respective read head or storage medium respectively.

EP 0 464 477 B1

**Patentansprüche**

1. Verfahren zum Umwandeln von analogen Signalen, die einzelnen Bits entsprechen und von einem Lesekopf einer Speichereinrichtung beim Abtasten eines Speichermediums gelesen werden, in digitale Signale, wobei die analogen Lesesignale unterscheidbare Formen besitzen und vor der Umwandlung aufbereitet worden sind, wobei das Umwandlungsverfahren die folgenden Schritte enthält: Erfassen der Form des aufbereiteten analogen Lesesignals, Korrelieren der Form mit einem gespeicherten Analogsignal-Referenzmuster, das einem Referenzsignal entspricht, und bei Übereinstimmung, die bei Vorliegen eines bestimmten Korrelationsergebnisses gegeben ist, Bewerten des Korrelationsergebnisses des analogen Signals als einen Leseimpuls und bei Nicht-Übereinstimmung Bewerten des Korrelationsergebnisses des Lesesignals als einen Nicht-Impuls, wobei der Leseimpuls als logische "1" bewertet wird und der Nicht-Impuls als logische "0" bewertet wird, ferner mit den Schritten des Unterteilens des Signalreferenzmusters in mehrere Abschnitte und des Speicherns eines das Signalreferenzmuster kennzeichnenden Wertes pro Abschnitt, wodurch die Lesesignale kontinuierlich einen in mehrere Abschnitte unterteilten Kurzzeitsignalspeicher durchlaufen, so daß das Lesesignalmuster verteilt längs jener Abschnitte auftritt, des Entnehmens des Spannungswerts des Lesesignals an jedem Abschnitt aus dem Kurzzeitsignalspeicher und des abschnittsweisen Korrelierens des Wertes mit dem entsprechenden Lesesignal-Referenzmuster, wobei die Korrelation in drei Bereiche unterteilt wird, nämlich in einen Bereich "ansteigend", in dem das Signalreferenzmuster ansteigt, in einen Bereich "Maximum", in dem das Signalreferenzmuster ein Maximum hat, und in einen Bereich "fallend", in dem das Signalreferenzmuster abfällt,

   wobei im Bereich "ansteigend" und im Bereich "fallend" ein Zwischenwert ($S_i$) dadurch berechnet wird, daß der Spannungswert ($R_i$), der an jedem entsprechenden Abschnitt des Kurzzeitsignalspeichers entnommen wird, von demjenigen des übernächsten Abschnitts subtrahiert wird, und der Korrelationsfaktor ($O_i$) des jeweiligen Abschnitts mittels einer Korrelation mit dem entsprechenden Wert ($M_i$) des Signalreferenzmusters entsprechend der folgenden Gleichung berechnet wird:

$$Q_i \;=\; \left| \frac{S_i}{M_i} \;-\; 1 \right|$$

   wobei im Bereich "Maximum" ein Zwischenwert ($S_j$) dadurch berechnet wird, daß aus den Spannungswerten ($R_j$), die an den Mittelabschnitten des Kurzzeitsignalspeichers entnommen werden, das arithmetische Mittel gebildet wird und der Korrelationsfaktor ($O_j$) dadurch berechnet wird, daß eine Korrelation mit dem Wert ($M_j$), der durch die Anzahl von Abschnitten des Signalreferenzmusters gewichtet ist, entsprechend der folgenden Gleichung gebildet wird:

$$Q_j \;=\; \begin{cases} 0 & \text{falls } s_j \geq c \times M_j \\ n & \text{falls } s_j < c \times M_j \end{cases}$$

   wobei c entsprechend der Anzahl (n) von Abschnitten des Kurzzeitsignalspeichers gewählt wird;
   wobei der Gesamtkorrelationsfaktor (CORR) als arithmetisches Mittel der einzelnen Korrelationen ($Q_i$, $Q_j$) bestimmt wird und
   wobei für einen gegebenen Gesamtkorrelationsfaktor (CORR) von einem Schwellenwertdetektor ein Leseimpuls bzw. eine logische "1" abgegeben wird.

2. Verfahren nach Anspruch 1,
   dadurch gekennzeichnet, daß die Korrelationsbedingung entsprechend dem zugelassenen Störabstand (Verhältnis von Signal- zu Störgröße) eingestellt wird.

3. Verfahren nach einem der Ansprüche 1 bis 2,
   dadurch gekennzeichnet, daß die Werte ($M_i$, $M_j$) das Signalreferenzmuster kennzeichnen und in Abschnitten in dem Speicher, die von einem Mikroprozessor bereitgestellt werden, gespeichert werden.

**4.** Verfahren nach Anspruch 3,
dadurch gekennzeichnet, daß die Werte, die das Signalreferenzmuster kennzeichnen, mittels des Mikroprozessors an das individuelle aus Lesekopf und Speichermedium bestehende System angepaßt werden.

**5.** Verfahren nach einem der Ansprüche 1 bis 4,
dadurch gekennzeichnet, daß bei Parallelverarbeitung von mehreren Lesesignalen eine entsprechende Mehrzahl von Signalreferenzmuster-Speichern verwendet wird.

**6.** Schaltungsanordnung zum Umwandeln von analogen Signalen, die einzelnen Bits entsprechen und von einem Lesekopf einer Speichereinrichtung beim Abtasten eines Speichermediums gelesen werden, in digitale Signale, mit einer Einrichtung zum Aufbereiten der analogen Lesesignale und einem Decodierer zum Decodieren der festgestellten Signale/Daten in eine der gespeicherten Bitfolge entsprechende Bitfolge, dadurch gekennzeichnet, daß sie aufweist:
einen Datenkorrelator (10), der einen Kurzzeitsignalspeicher (11), in dem das aufbereitete analoge Lesesignal gespeichert wird, einen Kurvenformspeicher, in dem ein einem Referenzsignal entsprechendes analoges Signalreferenzmuster gespeichert ist, und einen Korrelator (12) aufweist, der eine Korrelation zwischen dem aufbereiteten analogen Lesesignal und dem analogen Signalreferenzmuster herstellt, sowie einen Schwellenwertdetektor (15), der bei Vorliegen einer bestimmten Korrelation einen Leseimpuls abgibt, wobei der Leseimpuls als logische "1" bewertet wird und der Nicht-Impuls als logische "0" bewertet wird, ferner mit einer Einrichtung zum Unterteilen des Signalreferenzmusters in mehrere Abschnitte, zum Speichern eines das Signalreferenzmuster kennzeichnenden Wertes pro Abschnitt, wodurch die Lesesignale kontinuierlich durch einen Kurzzeitsignalspeicher laufen, der in mehrere Abschnitte unterteilt ist, wodurch das Lesesignalmuster verteilt längs jener Abschnitte auftritt, zum Entnehmen des Spannungswertes des Lesesignals an jedem Abschnitt aus dem Kurzzeitsignalspeicher sowie zum Korrelieren des Signals abschnittsweise mit dem entsprechenden Lesesignalreferenzmuster, wobei die Korrelation in drei Bereiche unterteilt wird, nämlich in einen Bereich "ansteigend", in dem das Signalreferenzmuster ansteigt, in einen Bereich "Maximum", in dem das Signalreferenzmuster ein Maximum aufweist, und in einen Bereich "fallend", in dem das Signalreferenzmuster abfällt,
wobei in dem Bereich "ansteigend" und in dem Bereich "fallend" ein Zwischenwert ($S_i$) dadurch berechnet wird, daß der Spannungswert ($R_i$), der an jedem entsprechenden Abschnitt des Kurzzeitsignalspeichers entnommen wird, von demjenigen des übernächsten Abschnitts subtrahiert wird, und der Korrelationsfaktor ($Q_i$) des entsprechenden Abschnitts mittels einer Korrelation mit dem entsprechenden Wert ($M_i$) des Signalreferenzmusters entsprechend der folgenden Gleichung berechnet wird:

$$Q_i \; = \; \left| \frac{S_i}{M_i} \; - \; 1 \right|$$

wobei im Bereich "Maximum" ein Zwischenwert ($S_j$) dadurch berechnet wird, daß das arithmetische Mittel der Spannungswerte ($R_j$) gebildet wird, die in den Mittelabschnitten des Kurzzeitsignalspeichers abgegriffen werden, und der Korrelationsfaktor ($Q_j$) durch eine Korrelation mit dem Wert ($M_j$), der durch die Anzahl von Abschnitten des Signalreferenzmusters gewichtet ist, entsprechend der folgenden Gleichung berechnet wird:

$$Q_j \; = \; \begin{cases} 0 & \text{falls } s_j \geq c \times M_j \\ n & \text{falls } s_j < c \times M_j \end{cases}$$

wobei c entsprechend der Anzahl (n) von Abschnitten des Kurzzeitsignalspeichers gewählt wird;
wobei der Gesamtkorrelationsfaktor (CORR) als arithmetisches Mittel der einzelnen Korrelationen ($Q_i$, $Q_j$) bestimmt wird und
wobei für einen gegebenen Gesamtkorrelationsfaktor (CORR) von einem Schwellenwertdetektor ein Leseimpuls oder eine logische "1" abgegeben wird.

**7.** Schaltungsanordnung nach Anspruch 6,
dadurch gekennzeichnet, daß der Kurzzeitsignalspeicher eine Analogpipeline (11) ist.

**8.** Schaltungsanordnung nach Anspruch 7,
dadurch gekennzeichnet, daß die Analogpipeline eine Übertragungsleitung ist.

**9.** Schaltungsanordnung nach Anspruch 7,
dadurch gekennzeichnet, daß die Analogpipeline eine Verzögerungsleitung ist.

**10.** Schaltungsanordnung nach Anspruch 6,
dadurch gekennzeichnet, daß die Analogpipeline durch eine Reihe von Verstärkerstufen gebildet ist.

**11.** Schaltungsanordnung nach einem der Ansprüche 6 bis 10, dadurch gekennzeichnet, daß der Kurzzeitsignalspeicher (11) in gleichen Abständen mehrere Abgriffe (Taps) aufweist, an denen das analoge Lesesignal abschnittsweise kontinuierlich abgegriffen werden kann,
daß der Kurvenformspeicher in mehrere Einzelspeicher aufgeteilt ist, wovon in jedem ein Wert, der einen Abschnitt des Signalreferenzmusters kennzeichnet, gespeichert ist, und daß der Korrelator (12) in mehrere Korrelatoren unterteilt ist, die eine abschnittsweise Korrelation zwischen dem analogen Lesesignal und dem Signalreferenzmuster ausführen können.

**12.** Schaltungsanordnung nach einem der Ansprüche 6 bis 11, dadurch gekennzeichnet, daß der Kurvenformspeicher (13) an einen Mikroprozessor (14) angeschlossen ist, der dem Kurvenformspeicher (13) das Signalreferenzmuster zuführt.

**13.** Schaltungsanordnung nach Anspruch 12, dadurch gekennzeichnet, daß das vom Mikroprozessor (14) dem Kurvenformspeicher (13) zugeführte Signalreferenzmuster an die individuellen Kenndaten des entsprechenden Lesekopfs bzw. des entsprechenden Speichermediums angepaßt wird.

**Revendications**

**1.** Procédé pour convertir des signaux analogiques correspondant à des bits individuels en signaux numériques, lesdits signaux analogiques ayant été lus par une tête de lecture d'un dispositif de mémoire à la détection d'un support de mémoire, dans lequel les signaux analogiques lus ont des formes discernables et ont été traités précédemment avant conversion, ledit procédé de conversion comprenant les étapes de : détection de la forme du signal analogique lu et traité, sa mise en corrélation avec une configuration de référence de signal analogique stocké qui correspond à un signal de référence et, en cas d'accord qui est donné en présence d'un résultat de corrélation particulier, évaluation du résultat de corrélation du signal analogique comme impulsion de lecture, et, en cas d'absence d'accord, évaluation du résultat de corrélation du signal lu comme absence d'impulsion, dans lequel l'impulsion de lecture est évaluée comme "1" logique et l'absence d'impulsion comme "0" logique, comprenant en outre les étapes de : division de la configuration de référence de signal en une pluralité de parties, et stockage d'une valeur par partie caractérisant la configuration de référence de signal, passage d'une manière continue des signaux lus dans une mémoire de signaux de courte période divisée en une pluralité de parties, pour faire ainsi en sorte que la configuration de signal lu apparaisse de façon répartie le long de ces parties, dérivation de la valeur de tension du signal lu dans chaque partie à partir de la mémoire de signaux de courte période et sa mise en corrélation partie par partie avec la configuration de référence de signal lu correspondante, dans lequel la corrélation est divisée en trois régions, c'est-à-dire en une région de "croissance" dans laquelle la configuration de référence de signal croît, en une région de "maximum" dans laquelle la configuration de référence de signal a un maximum, et en une région de "décroissance" dans laquelle la configuration de référence de signal est décroissante, où, dans la région de "croissance" et dans la région de "décroissance", une valeur intermédiaire ($S_i$) est calculée par la valeur de tension ($B_i$) sortie de chaque partie respective de la mémoire de signaux de courte période qui est retranchée de celle de la seconde partie à partir de celle-ci, et le facteur de corrélation ($Q_i$) de la partie respective est calculé au moyen d'une corrélation avec la valeur ($M_i$) correspondante de la configuration de référence de signal conformément à l'équation suivante :

$$Q_i \; = \; \left| \frac{S_i}{M_i} - 1 \right|$$

où, dans la région de "maximum" une valeur intermédiaire ($S_i$) est calculée par la moyenne arithmétique qui est composée des valeurs de tension ($R_j$) sorties des parties centrales de la mémoire de signaux de courte période, et le facteur de corrélation ($Q_j$) est calculé par corrélation avec la valeur ($M_j$) pondérée par le nombre de parties de la configuration de référence de signal conformément à l'équation suivante :

$$Q_j = \begin{cases} o \ dans\ le\ cas\ où\ S_j \geq cxM_j \\ n \ dans\ le\ cas\ où\ S_j < cxM_j \end{cases}$$

où c est choisi en correspondance avec le nombre (n) des parties de la mémoire de signaux de courte période ; où le facteur de corrélation totale (CORR) est déterminé comme moyenne arithmétique des corrélations individuelles ($Q_i$, $Q_j$), et où, pour un facteur de corrélation totale (CORR) donné, une impulsion de lecture ou un "1" logique est émis par un détecteur de valeur de seuil.

2. Procédé selon la revendication 1, caractérisé en ce que la condition de corrélation est ajustée en correspondance avec le rapport signal/bruit autorisé (rapport d'une grandeur de signal à une grandeur d'interférence).

3. Procédé selon l'une des revendications 1 et 2, caractérisé en ce que les valeurs ($M_i$, $M_j$) caractérisent la configuration de référence de signal et sont stockées dans des parties de la mémoire prévue par un microprocesseur.

4. Procédé selon la revendication 3, caractérisé en ce que les valeurs caractérisant la configuration de référence de signal sont mises en correspondance au moyen du microprocesseur avec le système individuel composé d'une tête de lecture et d'un support de mémoire.

5. Procédé selon l'une des revendications 1 à 4, caractérisé en ce que, dans un traitement en parallèle d'une pluralité de signaux lus, on utilise une pluralité correspondante de mémoires de configuration de référence de signal.

6. Agencement de circuit pour convertir des signaux analogiques correspondant à des bits individuels qui sont lus par une tête de lecture d'un dispositif de mémoire à la détection d'un support de mémoire en signaux numériques, avec un dispositif pour traiter les signaux analogiques lus et un décodeur pour décoder les signaux/données en une séquence de bits correspondant à la séquence de bits stockés, caractérisé en ce que l'agencement de circuit comprend :

    un corrélateur de données (10) qui comprend une mémoire de signaux de courte période (11) dans laquelle le signal analogique lu et traité est stocké et une mémoire de forme de courbe (13) dans laquelle une configuration de référence de signal analogique correspondant à un signal de référence est stockée, et
    un corrélateur (12) qui génère une corrélation entre le signal analogique lu et traité et la configuration de référence de signal analogique, ainsi qu'un détecteur de valeur de seuil (15) qui émet une impulsion de lecture en présence d'une corrélation particulière,
    dans lequel l'impulsion de lecture est évaluée comme "1" logique et l'absence d'impulsion comme "0" logique, comprenant en outre des moyens pour diviser la configuration de référence de signal en une pluralité de parties, et stocker une valeur par partie caractérisant la configuration de référence de signal, faire en sorte que les signaux lus passent d'une manière continue dans une mémoire de signaux de courte période divisée en une pluralité de parties, pour faire ainsi en sorte que la configuration de signal lu apparaisse d'une manière répartie le long de ces parties, dériver la valeur de tension du signal lu dans chaque partie à partir de la mémoire de signaux de courte période et la mettre en corrélation partie par partie avec la configuration de référence de signal lu correspondant,
    dans lequel la corrélation est divisée en trois régions, c'est-à-dire en une région de "croissance" dans laquelle la configuration de référence de signal est croissante, en une région de "maximum" dans laquelle la configuration de référence de signal a un maximum et en une région de "décroissance" dans laquelle la configuration de référence de signal est décroissante, où, dans la région de "croissance" et dans la région de "décroissance", une valeur intermédiaire ($S_i$) est calculée par la valeur de tension ($R_i$) sortie de chaque partie respective de la mémoire de signaux de courte période qui est retranchée de celle de la seconde partie à partir de celle-ci, et le facteur de corrélation ($Q_i$) de la partie respective est calculé au moyen d'une corrélation avec la valeur ($M_i$) correspondante de la configuration de référence de signal conformément à l'équation suivante :

$$Q_i = \left| \frac{S_i}{M_i} - 1 \right|$$

où, dans la région de "maximum", une valeur intermédiaire $(S_j)$ est calculée par la moyenne arithmétique qui est composée des valeurs de tension $(R_j)$ sorties des parties centrales de la mémoire de signaux de courte période, et le facteur de corrélation $(Q_j)$ est calculé par corrélation avec la valeur $(M_j)$ pondérée par le nombre de parties de la configuration de référence de signal conformément à l'équation suivante :

$$Q_j = \begin{cases} o \ dans \ le \ cas \ où \ S_j \geq cxM_j \\ n \ dans \ le \ cas \ où \ S_j < cxM_j \end{cases}$$

où c est choisi en correspondance avec le nombre (n) des parties de la mémoire de signaux de courte période, où le facteur de corrélation totale (CORR) est déterminé comme moyenne arithmétique des corrélations individuelles $(Q_i, Q_j)$, et où, pour un facteur de corrélation totale (CORR) donné, une impulsion de lecture ou un "1" logique est émis par un détecteur de valeur de seuil.

7. Agencement de circuit selon la revendication 6, caractérisé en ce que la mémoire de signaux de courte période est un pipeline analogique (11).

8. Agencement de circuit selon la revendication 7, caractérisé en ce que le pipeline analogique est une ligne de transmission.

9. Agencement de circuit selon la revendication 7, caractérisé en ce que le pipeline analogique est une ligne à retard.

10. Agencement de circuit selon la revendication 7, caractérisé en ce que le pipeline analogique est composé d'une série d'étages amplificateurs.

11. Agencement de circuit selon l'une des revendications 6 à 10, caractérisé en ce que la mémoire de signaux de courte période (11) comporte à égales distances une pluralité de dérivations (prises) d'où le signal analogique lu peut être extrait d'une manière continue en parties, où la mémoire de forme de courbe est divisée en une pluralité de mémoires individuelles, où, dans chacune d'elles, une valeur caractérisant une partie de la configuration de référence de signal est stockée et où le corrélateur (12) est divisé en une pluralité de corrélateurs qui peuvent réaliser une corrélation par partie entre le signal analogique lu et la configuration de référence de signal.

12. Agencement de circuit selon l'une des revendications 6 à 11, caractérisé en ce que la mémoire de forme de courbe (13) est connectée à un microprocesseur (14) qui fournit la configuration de référence de signal à la mémoire de forme de courbe (13).

13. Agencement de circuit selon la revendication 12, caractérisé en ce que la configuration de référence de signal fournie par le microprocesseur (14) à la mémoire de forme de courbe (13) est mise en correspondance avec les caractéristiques individuelles de la tête de lecture respective ou du support de mémoire, respectivement.

Fig.1

Fig.2

Fig.3

Fig.4